# EUROPÄISCHE PATENTSCHRIFT

(11) **EP 1 809 937 B1**
(45) Veröffentlichungstag und Bekanntmachung des Hinweises auf die Patenterteilung: **13.07.2011**
(21) Anmeldenummer: 05800276.7
(22) Anmeldetag: 03.11.2005
(51) Int. Cl.: F16K 37/00

(54) **MECHATRONIK**
MECHATRONIC DEVICE
DISPOSITIF MECATRONIQUE

(30) Priorität: 04.11.2004 DE 102004053200; 04.08.2005 DE 102005036663
(43) Veröffentlichungstag der Anmeldung: 25.07.2007
(73) Patentinhaber: WABCO GmbH, 30453 Hannover (DE)
(72) Erfinder: TEICHMANN, Andreas, 30916 Isenhagen HB (DE); AHRENS, Karl, 30419 Hannover (DE)
(74) Vertreter: Günther, Constantin
(86) Internationale Anmeldenummer: PCT/EP2005/011736
(87) Internationale Veröffentlichungsnummer: WO 2006/048269

(56) Entgegenhaltungen:
- WO-A-02/097313
- US-A- 5 535 779
- US-A- 5 749 060
- US-A1- 2003 019 277

## Beschreibung

Die Erfindung bezieht sich auf eine Mechatronik gemäß dem Oberbegriff des Patentanspruchs 1.

DE 4334595 C1 (Familienmitglied zum US 5 749 060) offenbart eine Steuerung, die aus einer Motorsteuerung und einer Getriebesteuerung besteht, die durch einen Kommunikationskanal miteinander verbunden sind. Das Getriebe wird mit Hilfe von elektrohydraulischen Drucksteuerventilen geschaltet, durch die Reibelemente in dem Getriebe betätigt werden. Die Getriebesteuerung ist an dem Getriebegehäuse befestigt. Magnetspulen der elektrohydraulischen Drucksteuerventile sind in die Getriebesteuerung integriert. Sensorsignale, die von der Getriebesteuerung auszuwerten sind, werden von Sensoren drahtlos an die Getriebesteuerung übertragen.

WO 02/097313 A1 offenbart einen optischen Wandler für die Detektion und die Fernanzeige von vorbestimmten Positionen eines beweglichen Teils, insbesondere eines Ventilelements.

Eine gattungsgemäße Mechatronik ist aus der

EP 1 180 602 A1 bekannt. Diese beschreibt eine Steuerventileinrichtung mit einer Elektronik-Box, die eine Platine zur Aufnahme elektronischer Bauteile enthält und einen Anschluss an einen externen Bus ermöglicht. Auf die Elektronik-Box sind ein oder mehrere Magnetventile aufsteckbar und damit elektrisch kontaktierbar. Durch die Elektronik werden die vom Bus kommenden elektrischen Steuersignale verarbeitet und auf die zugehörigen Ventile verteilt. Die bekannte Steuerventileinrichtung weist keine Sensoren auf.

Weiter ist aus der DE 100 49 958 A1 eine fluidtechnische Anordnung sowie Ventilanordnung und Aktuator hierfür bekannt. Der zugehörige Aktuator weist dabei einen Arbeitszylinder mit einem Kolben auf, dessen Stellung über Wegsensoren bzw. Endschalter feststellbar ist. Die Ausgangssignale der Sensoren können wahlweise drahtgebunden oder drahtlos weitergemeldet werden. Bei drahtloser Verbindung sind die Sensoren als Transponder ausgestaltet.

In Mechatroniken, insbesondere in solchen mit Magnetventilen, müssen häufig ein oder mehrere Drücke erfasst und in der zugehörigen System-Elektronik, die sich in einem gemeinsamen Gehäuse befinden kann, verarbeitet werden (EP 1 152 231 A2). Hierzu werden entsprechende Drucksensoren in diese Geräte eingebaut. Diese Drucksensoren müssen mit einem zugehörigen Druckkanal dichtend verbunden werden und so befestigt werden, dass die Druckkraft aufgenommen werden kann. Weiterhin muss eine elektrische Verbindung, die meist dreipolig ausgebildet ist, zwischen dem Drucksensor und der Systemelektronik hergestellt werden.

Dies birgt gewisse Zuverlässigkeitsrisiken. Es ist z.B. möglich, dass es durch Temperaturschwankungen und durch die Elastizität der Sensorbefestigung in Verbindung mit Druckschwankungen zu Relativbewegungen des Drucksensors bezüglich zur übrigen Mechatronik bzw. System-Elektronik kommt. Dadurch können die elektrischen Verbindungen mechanisch unzulässig belastet werden. So können Kontakte durch Reibkorrosion beeinträchtigt werden, Bondverbindungen können durch Ermüdung brechen, und Lötstellen können ebenfalls ermüden und so Wackelkontakte erzeugen.

Weiterhin kann die Schnittstelle zum pneumatischen oder hydraulischen Druckkanal undicht werden.

Ausserdem stören bzw. verkomplizieren derartige elektrische Verbindungen oft den Herstellungsprozess, indem z. B. ein zusätzlicher Lötprozess eingefügt werden muss. Schliesslich ist die Umgebung einer Mechatronik, insbesondere bei Einbau in einem KFZ, oft besonders mit elektrischen Störungen durch Funkwellen belastet. Dies kann sich auf eine Signalübertragung negativ auswirken.

Der Erfindung liegt die Aufgabe zu Grunde, in einer Mechatronik, insbesondere einem Ventil mit eingebauter Elektronik einschliesslich Sensoren, eine besonders störunanfällige Übermittlung der Sensorsignale zu ermöglichen.

Diese Aufgabe wird durch die im Kennzeichen des Patentanspruchs 1 enthaltene Erfindung gelöst. Die Unteransprüche enthalten zweckmäßige Weiterbildungen.

Durch die erfindungsgemässe Anordnung von Sensor-Modulen direkt innerhalb von Druckführungskanälen oder in mit diesen verbundenen Hohlräumen ohne eine besondere Abdichtung und ohne elektrische Anschlüsse und durch die erfindungsgemäße Datenübertragung per drahtloser Übertragungstechnik über kurze Strecken innerhalb des Mechatronik-Gehäuses mittels Funktechnik oder mittels lichtemittierender Elemente, also z.B. Leuchtdioden, wird eine erhöhte Betriebszuverlässigkeit erzielt. Hierdurch ist auch die oben erläuterte Empfindlichkeit von elektrischen Verbindungstellen gegen durch Temperaturschwankungen verursachte Längenänderungen nicht mehr gegeben. Weiter werden zusätzliche Lötvorgänge zum Anschluss der Sensor-Module eingespart. Aufwändige pneumatische oder hydraulische Abdichtungen der Sensoren gegen die Gehäusewände können entfallen. Schliesslich entfällt bei Verwendung lichtemittierender Elemente auch eine Empfindlichkeit der Datenverbindung gegenüber störenden Funkwellen.

Die erfindungsgemäße Anwendung von drahtloser Übertragungstechnik bzw. Funktechnik zur Datenübertragung ist dem Fachmann aus unterschiedlichen Anwendungsgebieten mittels verschiedener Verfahren bekannt.

Ein bekanntes Verfahren ist die Transpondertechnik. Mit Hilfe dieses Verfahrens kann z.B. der Reifendruck eines Fahrzeugreifens von der Karosserie aus berührungslos gemessen werden (DE 199 24 830 A1). Eine Batterie zur Stromversorgung des im Reifen befindlichen Sensors ist dabei nicht notwendig.

Die Übertragung kann z.B. so erfolgen, dass zunächst von aussen ein Anforderungssignal (Schwingung) gesendet wird, hierdurch im Sensor ein druckabhägiger Schwingkreis angeregt wird, und dieser dann kurzzeitig ein entsprechend druckabhängiges analoges Signal zurücksendet. Da die Verwendung von Transpondertechnik ständig zunimmt, ist zudem mit einer Kostenreduzierung der benötigten Module (Sender und Empfänger) zu rechnen.

Ein anderes bekanntes Verfahren ist die Bluetooth-Technik. Aus dem Aufsatz "Energieträger Bluetooth-Frequenz", Auto & Elektronik 1/2002, ist ebenfalls ein Verfahren zur Reifendruckkontrolle bekannt, bei dem sowohl die Drucksignale als auch die Energie zur Versorgung des Drucksensors drahtlos über Funkwellen mittels Bluetooth übertragen werden.

Durch die weiter erfindungsgemäß vorgeschlagene Verwendung von Licht zur Datenübertragung ergibt sich eine erhöhte Übertragungssicherheit. Dies gilt vor allem in einer mit Störstrahlung besonders belasteten Umgebung, wie z.B. in einem Kraftfahrzeug.

Die Erfindung wird im Folgenden anhand einer Zeichnung näher erläutert.

Diese zeigt in
- Fig. 1: eine schematische Darstellung einer Me- chatronik mit einem Magetventil, einer Steuerelektronik und einem in einem Druck- führungskanal eingebauten Sensor-Modul,
- Fig. 2: einen Schnitt durch die Mechatronik der Fig. 1 in Höhe der Elektronikplatine
- Fig. 3: einen anderen Schnitt durch die Mechatronik der Fig. 1 mit Einlass- und Auslassventil sowie Druckanschlüssen,
- Fig. 4: einen weiteren Schnitt durch die Mechatro- nik der Fig. 1 mit Einlass- und Auslassven- til sowie Steuerelektronik,
- Fig. 5: eine schematische Darstellung der Energie- und Datenübertragung zwischen der Steuer- elektronik und dem Sensor-Modul,
- Fig. 6: einen Schnitt durch eine Elektronik mit zwei Lesestationen in Verbindung mit zwei Sensor-Modulen,
- Fig. 7: einen Schnitt durch eine Elektronik mit ei- ner gemeinsamen Lesestation in Verbindung mit zwei Sensor-Modulen, und
- Fig. 8: einen Schnitt durch eine Elektronik mit ei- ner Lesestation und einem nur teilweise im Druckführungskanal befindlichen Sensor- Modul.
- Fig. 9: einen Schnitt durch einen Druckführungska- nal mit einem eingeklemmtem Sensor-Modul
- Fig. 10: einen Schnitt durch einen Druckführungska- nal mit einem eingeklebtem Sensor-Modul
- Fig. 11: einen Schnitt durch zwei Druckführungskanä- le mit zwei eingeschraubten Sensor-Modulen
- Fig. 12: eine weitere schematische Darstellung einer Mechatronik mit einem Magetventil, einer Steuerelektronik und einem in einem Druck- führungskanal eingebauten Sensor-Modul,
- Fig. 13: einen Schnitt durch die Mechatronik der Fig. 12 in Höhe der Elektronikplatine
- Fig. 14: einen anderen Schnitt durch die Mechatronik der Fig. 12 mit Einlass- und Auslassventil sowie Druckanschlüssen,
- Fig. 15: einen weiteren Schnitt durch die Mechatro- nik der Fig. 12 mit Einlass- und Auslass- ventil sowie Steuerelektronik,
- Fig. 16a: eine schematische Darstellung der Energie- und Datenübertragung zwischen der Steuer- elektronik und einem Drucksensor-Modul,
- Fig. 16b: eine schematische Darstellung der Energie- und Datenübertragung zwischen der Steuer- elektronik und zwei Drucksensor-Modulen mit zwei Lesestationen,
- Fig. 16c: eine schematische Darstellung der Energie- und Datenübertragung zwischen der Steuer- elektronik und zwei Drucksensor-Modulen mit einer gemeinsamen Lesestation,
- Fig. 17: einen Schnitt durch eine Elektronik mit zwei Lesestationen in Verbindung mit zwei Sensor-Modulen,
- Fig. 18: einen Schnitt durch eine Elektronik mit zwei Lesestationen in Verbindung mit zwei Sensor-Modulen, und
- Fig. 19: einen Schnitt durch eine Elektronik mit ei- ner Lesestation und einem nur teilweise im Druckführungskanal befindlichen Sensor- Modul.
- Fig. 20: einen Schnitt durch einen Druckführungska- nal mit einem eingeklemmten Sensor-Modul
- Fig. 21: einen Schnitt durch einen Druckführungska- nal mit einem eingeklebten Sensor-Modul
- Fig. 22: einen Schnitt durch zwei Druckführungskanä- le mit zwei eingeschraubten Sensor-Modulen

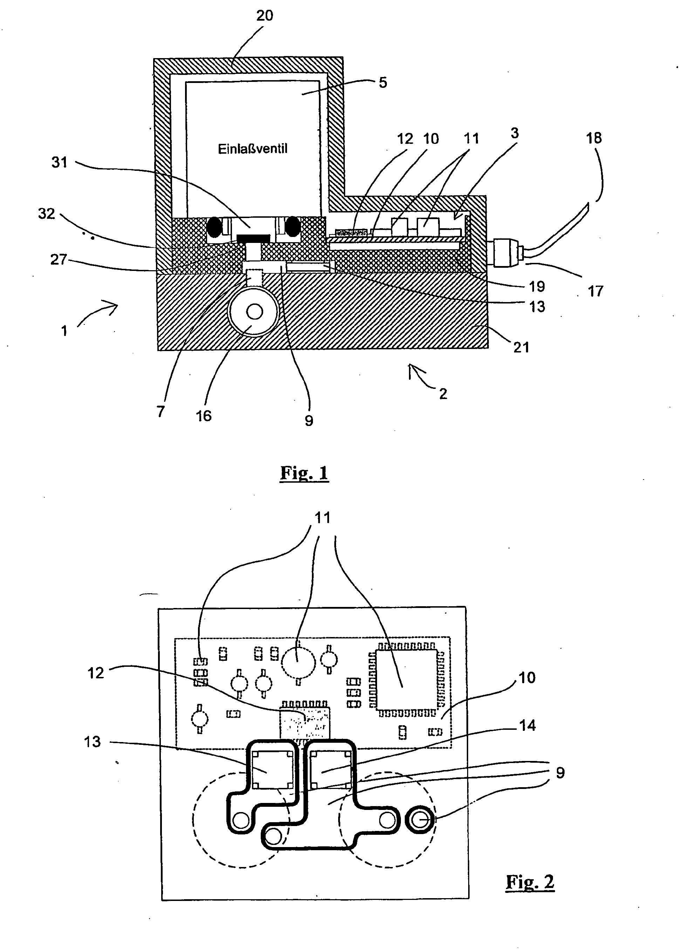

Die Fig. 1 zeigt in schematischer Darstellung eine Mechatronik, hier zum Betrieb einer Ventil-Anordnung, mit einem Gehäuse (1), das aus einem Unterteil (21) und einem Deckel (20) besteht. Die Mechatronik besteht weiter aus einem mechanischen Teil (2) und einem elektronischen Teil (3).

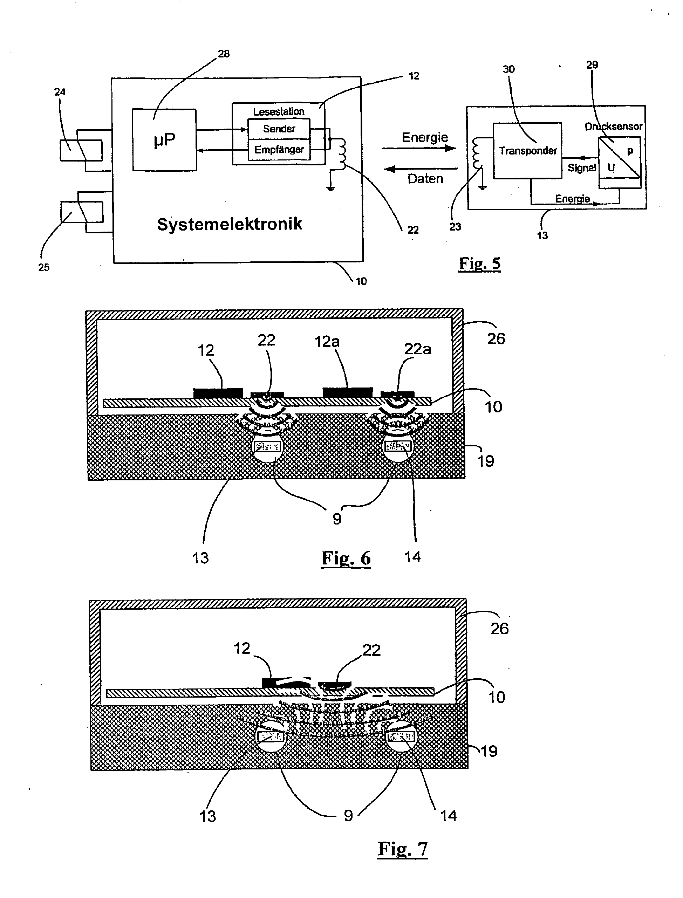

Der elektronische Teil (3) kann dabei innerhalb des gemeinsamen Deckels (20) angeordnet sein. Er kann aber auch in einem separaten Elektronikgehäuse (26) angeordnet sein (siehe Fig. 6), das am mechanischen Teil (2) des Gehäuses (1) angebracht ist.

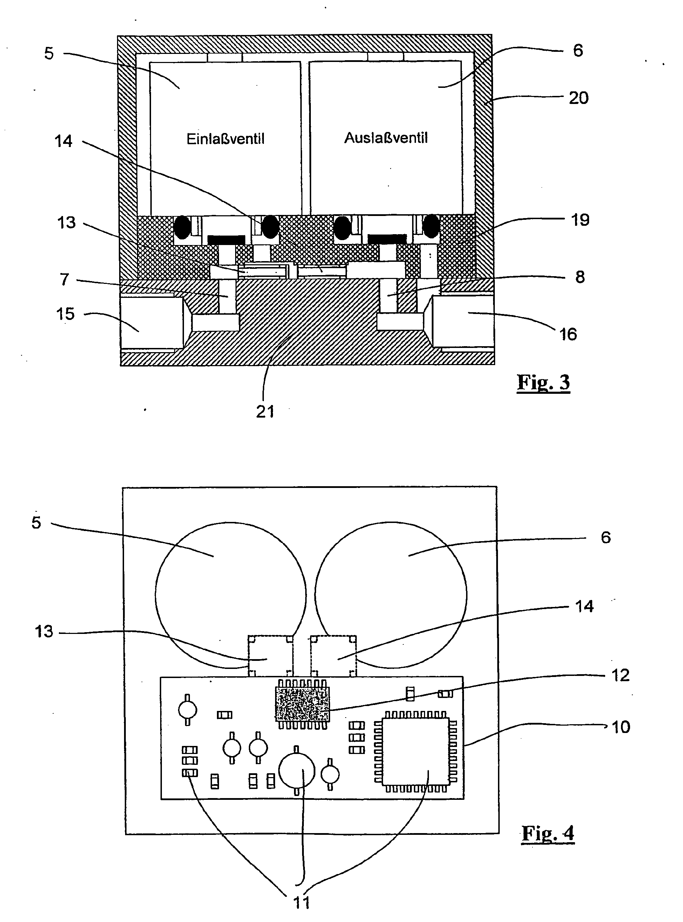

Unter dem gemeinsamen Deckel (20) ist ein Magnetventil-Paar (5, 6) (vergl. Fig 3) angeordnet, das aus einem Einlassventil (5) und einem Auslassventil (6) besteht. Sichtbar ist hier nur das Einlassventil (5), welches ein Ventilschliessglied (31) aufweist, das mittels einer Dichtung (32) einen Ventilsitz (27) abdichten kann. Hierdurch lässt sich ein Durchgang für Druckluft oder ein Fluid öffnen oder schließen.

Zum Anschluss des Ventils an äußere Druckleitungen ist mindestens ein Druckanschluss (16) vorgesehen, der sich im Unterteil (21) des Gehäuses (21) befindet. Zum Anschluss des Druckanschlusses (16) an den Ventilsitz (27) ist ein Druckführungskanal (7) vorgesehen.

Die Ventil-Anordnung samt zugehörigen Druckführungskanälen ist nur schematisch gezeichnet. Sie kann z.B. dazu dienen, einen Druck in einem Behälter zu steigern, abzusenken, oder zu halten. Die Druckführungskanäle (7, 8, 9) können sowohl einen runden als auch einen rechteckigen Querschnitt haben.

In einem weiteren Druckführungskanal (9) oder in einem mit diesem verbundenen Hohlraum befindet sich ein Sensor-Modul (13). Dieses besteht aus einem Drucksensor (29) und einem Transponder (30) (vergl. Fig. 5). Das Drucksensor-Modul (13) ist durch geeignete Maßnahmen innerhalb des Druckführungskanals (9) befestigt.

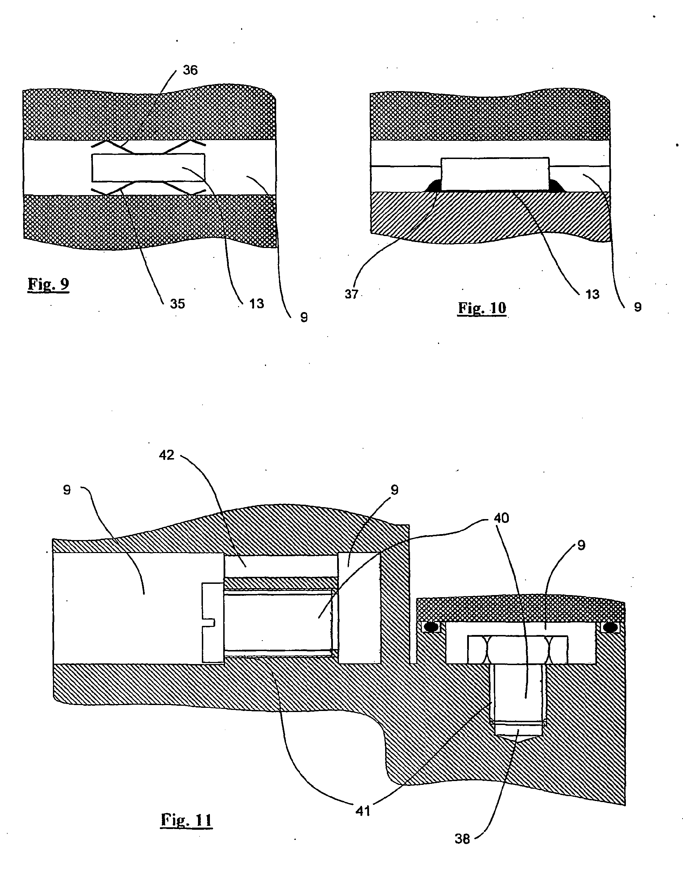

Das Sensor-Modul (13) kann beispielsweise durch eine Klemmkraft an seinem Ort gehalten werden (vergl. Fig. 9). Hierzu ist es mit Federn (35, 36) ausgestattet, die sich an den Innenwänden eines der Druckführungskanäle (7, 8, 9) abstützen. Die Innenwand des Druckführungskanals kann flach oder rund ausgebildet sein.

Auch eine Befestigung des Sensormoduls (13) an den Wänden eines der Druckführungskanäle (7, 8, 9) mittels eines Klebstoffes (37) ist möglich (vergl. Fig. 10).

Zweckmässig kann das Sensormodul (40) auch mit einem zylinderförmigen Gehäuse mit Aussengewinde (41) versehen sein, mit welchem es in ein von einem Druckführungskanal (7, 8, 9) ausgehenden Sackloch (38) eingeschraubt ist (vergl. Fig. 11 rechts).

Es ist weiter auch möglich, das zylinderförmige Sensor-Modul (40) mittels des Gewindes (41) in eine Durchgangsbohrung zwischen zwei Druckführungskanälen (9) einzuschrauben (vergl. Fig 11 links). Dabei muß, z.B. mit einer Parallel-Bohrung (42), für eine Durchgängigkeit für das Druckmittel gesorgt werden.

Der Druckführungskanal (9) wird in der Fig. 1 teilweise durch eine Zwischenplatte (19) gebildet, die aus einem nicht metallischen Material, beispielsweise einem Kunststoff, besteht. Dagegen sind der mechanische Teil (2), also Unterteil (21) mit Druckführungskanal (7) sowie Druckanschluß (16) und auch der Deckel (20), vorzugsweise aus Metall, beispielsweise Aluminium, ausgebildet.

Es ist aber auch möglich, das gesamte Mechatronikgehäuse (1) aus Kunststoff zu fertigen.

Die Druckführungskanäle (7, 8, 9) können beliebig gestaltet sein. Sie können als Bohrungen, Hohlräume oder auch als Sackbohrungen ausgeführt sein, in welche ein Sensor eingeschraubt ist.

Der elektronische Teil (3) des Gehäuses (1) enthält eine Elektronikplatine (10), welche mit elektronischen Bauteilen (11) bestückt ist. Zu diesen gehört auch eine Lesestation (12), welche erfindungsgemäß mittels Funktechnik mit dem Sensor-Modul (13) kommuniziert. Die drahtlose Übertragung von Energie bzw. elektrischen Daten in beide Richtungen wird durch die Ausbildung der Zwischenplatte (19) aus Kunststoff ermöglicht.

Zum Anschluss des elektronischen Teils (3) an weitere, z. B. in einem Fahrzeug befindliche, Elektroniken ist die Elektronikplatine (10) an einen elektrischen Anschlussstecker (17) mit einem Anschlusskabel (18) angeschlossen.

Die Fig. 2 zeigt einen Schnitt durch das Mechatronik-Gehäuse (1) der Fig. 1 in Höhe der Elektronik-Platine (10). Wie man sieht, befinden sich auf der Elektronik-Platine (10) elektronische Bauteile (11), einschließlich eines Mikroprozessors (28) und der Lesestation (12). Letztere kommuniziert per Funktechnik mit zwei Sensor-Modulen (13, 14). Diese sind in Druckführungskanälen (9) angeordnet, die je nach Bedarf unterschiedlich geformt sein können. Die Druckführungskanäle (9) sind ganz oder teilweise in der aus Isolierstoff bestehenden Zwischenplatte (19) (siehe Fig. 1) angeordnet.

Die Fig. 3 zeigt einen anderen Schnitt durch das Mechatronik-Gehäuse (1) der Fig. 1. Erkennbar sind hier zwei Magnetventile (5, 6), die als Einlassventil bzw. Auslassventil arbeiten. Erkennbar sind weiterhin zwei Sensor-Module (13, 14), welche hier in einem Zwischenraum zwischen der Zwischenplatte (19) und dem metallischen Unterteil (21) des Mechatronik-Gehäuses (1) angeordnet sind. Weiterhin sind zwei Druckanschlüsse (15, 16) zum Anschluss der Mechatronik an eine Druckluftanlage oder an eine hyraulische Anlage erkennbar.

Die Fig. 4 zeigt einen weiteren Schnitt durch die Mechatronik in Höhe der Elektronik-Platine (10). Erkennbar sind wiederum die beiden Magnetventile (5, 6), die Bestückung der Elektronikplatine (10) mit Bauteilen (11), die Sensor-Module (13, 14), sowie die diesen zugeordnete benachbarte gemeinsame Lesestation (12).

Die Fig. 5 zeigt eine schematische Darstellung der Energie- und Datenübertragung zwischen der sich auf der Elektronik-Platine (10) befindlichen Steuerelektronik bzw. Systemelektronik und dem Sensor-Modul (13).

Die Elektronik-Platine (10) enthält neben weiteren hiernicht dargestellten Bauteilen die Lesestation (12) und den Mikroprozessor (28). An die Platine (10) sind weiter Magnetwicklungen (24, 25) der Magnetventile (5, 6) angeschlossen. An die Lesestation (12) ist eine Antenne (22) angeschlossen, die beispielsweise als auf die Platine (10) gedruckte Spule ausgebildet sein kann.

Auf dem Sensor-Modul (13) ist ein Transponder (30) angeordnet. Dieser ist ebenfalls an eine Antenne (23), die auch als eine auf die Platine gedruckte Spule ausgebildet sein kann, angeschlossen. Der Transponder (30) ist weiter mit je einer Leitung zur Energieübertragung und Daten-Rückübermittlung an einen Drucksensor (29) angeschlossen. Dieser wandelt einen Umgebungsdruck (P) in eine zum Druck proportionale Spannung U um, welche dem Transponder (30) mitgeteilt wird.

Durch zwischen der Elektronik-Platine (10) und dem Sensor-Modul (13) befindliche Pfeile ist angedeutet, dass im Betrieb, dh. falls ein Messwert gewünscht wird, zunächst eine Energieübertragung mittels eines Sende-Impulses von der Lesestation (12) zum Sensor-Modul (13) und anschliessend eine Rückübertragung von Daten, also hier von Druckwerten, erfolgt. Je nach Bauart können Energieübertragung und Datenübertragung auch gleichzeitig erfolgen.

Bei mehreren Sensor-Modulen kann zusätzlich zur Daten-Rückübertragung auch ein codiertes Signal zur Identifikation des antwortenden Sensor-Moduls (13) rückübertragen werden.

Es ist auch möglich, den Sendeimpuls zu kodieren, z.B. durch Verwendung unterschiedlicher Frequenzen zur Anregung der verschiedenen Sensor-Module, von denen ein Messwert benötigt wird.

Wie oben bereits erläutert, kann der Drucksensor (29) auch Teil des Transponders (30) sein. Die Resonanzfrequenz der Rückantwort ist dabei abhängig vom Umgebungsdruck. Die gezeichnete separate Übertragung von Energie und Signal innerhalb des Sensor-Moduls (13) kann dann entfallen.

Die Fig. 6 zeigt die Elektronik-Platine (10), die hier in ein separates Elektronik-Gehäuse (26) eingebaut ist. Auf der Platine (10) sind zwei Lesestationen (12, 12a) angeordnet, die über Antennen (22, 22a) mit Sensor-Modulen (13, 14) kommunizieren. Letztere sind direkt in Druckführungskanälen (9), die hier rohrförmig ausgebildet sind, angeordnet. Dabei muß natürlich ein ausreichender Querschnitt für den Durchfluss des Druckmittels frei bleiben.

Die Fig. 7 zeigt entsprechend der Fig. 6 eine in einem Elektronikgehäuse (26) eingebaute Elektronik-Platine (10), die hier aber nur mit einer einzigen, gemeinsamen Lesestation (12) ausgerüstet ist. Diese kommuniziert wiederum über eine einzige Antenne (22) mit zwei Sensor-Modulen (13, 14).

Zur Unterscheidung der beiden Sensor-Module ist hier die zusätzliche Übertragung von entsprechenden Codierungen der Sensor-Module (13, 14) erforderlich. Eine solche Codierung kann z.B. durch unterschiedliche Datencodes oder durch Verwendung von unterschiedlichen Trägerfrequenzen bei der Übertragung der Sendeimpulse sowie der Rückübertragung der Messwerte erfolgen.

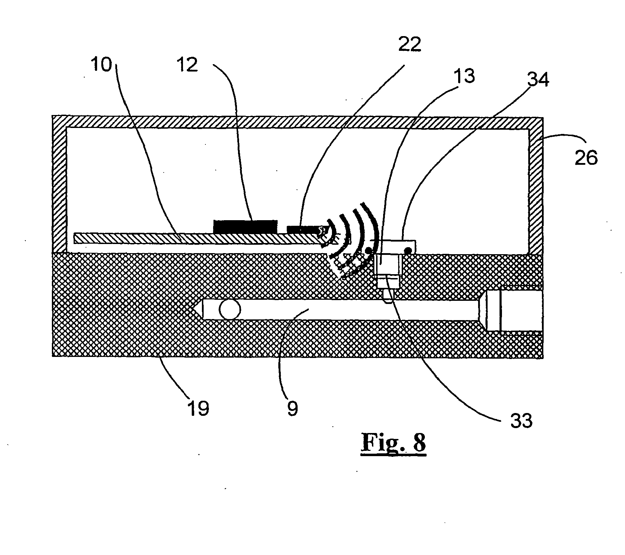

In der Fig. 8 ist ein weiteres Ausführungsbeispiel gezeigt, bei dem das Sensor-Modul (13) nur teilweise im Druckführungskanal (9) angeordnet ist. Dabei ragt ein sensierender Teil (33) des Sensor-Moduls in den Druckführungskanal (9) hinein, während ein sendender bzw. empfangender Teil (34) innerhalb des Elektronikgehäuses (26), in unmittelbarer Nähe der Lesestation (12) mit Antenne (22) angeordnet ist.

Diese Variante hat den Vorteil, dass die Zwischenplatte (19) nicht aus Isoliermaterial zu bestehen braucht. Demgegenüber wird aber mehr Platz im Elektronikgehäuse (26) benötigt. Ausserdem besteht weniger Freiheit bezüglich der Anordnung der Druckführungskanäle (9), die hier unterhalb des Elektronikgehäuses (26) liegen müssen. Weiter muss eine ausreichende Abdichtung des Sensor-Moduls (13) gegenüber der Zwischenplatte (19) gewährleistet sein.

Die Fig. 9, 10, 11 wurden bereits oben erläutert.

In allen Ausführungsbeispielen sind zweckmäßig die Lesestationen (12, 12a) und die Sensor-Module (13, 14) in unmittelbarer räumlicher Nähe zueinander angeordnet. Dies hat den Vorteil, dass die Sendeleistungen der Lesestationen (12, 12a) sowie die Antennen (22, 22a, 23) klein ausgebildet werden können. Unter "räumlicher Nähe" ist hier eine Entfernung von etwa 1 bis 5 cm, je nach Grösse der Mechatronik, zu verstehen.

Durch die Sensor-Module (13, 14) können neben Drücken auch andere physikalische Größen sensiert und übertragen werden. Denkbar ist hier eine Daten-Übertragung von Temperaturen, von Massendurchsätzen (beispielsweise Druckluftmengen oder Fluidmengen), von Wegen (beispielsweise Wegen von Ventilgliedern), von magnetischen Feldstärken (beispielsweise Feldstärken der Magnetwicklungen der Magnetventile), oder von der chemischen Zusammensetzung des in den Druckführungskanälen fliessenden Gases oder Fluids.

Als drahtlose Funktechnik wird die bereits oben erwähnte Transpondertechnik oder die ebenfalls erwähnte Bluetooth-Technik verwendet. Beide Techniken sind bereits seit längerem bekannt bzw. genormt und somit als ausreichend zuverlässig und preisgünstig anzusehen.

Die folgenden Ausführungsbeispiele beziehen sich auf eine Datenübertragung mittels Licht.

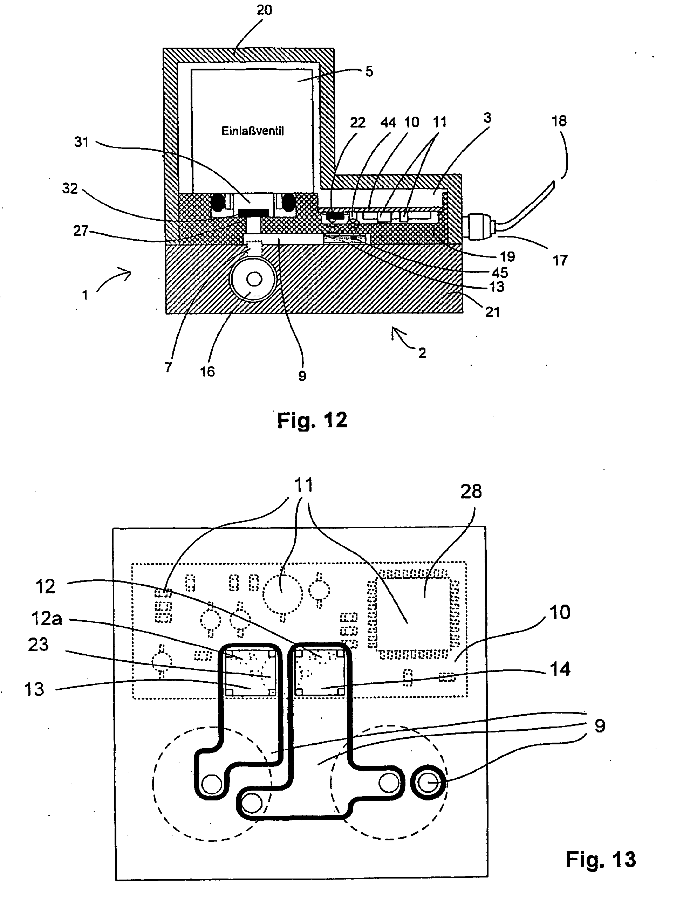

Die Fig. 12 zeigt in schematischer Darstellung eine Mechatronik, hier zum Betrieb einer Ventil-Anordnung, mit einem Gehäuse (1), das aus einem Unterteil (21) und einem Deckel (20) besteht. Die Mechatronik besteht weiter aus einem mechanischen Teil (2) und einem elektronischen Teil (3).

Der elektronische Teil (3) kann dabei innerhalb des gemeinsamen Deckels (20) angeordnet sein. Er kann aber auch in einem separaten Elektronikgehäuse (26) angeordnet sein (siehe Fig. 6), das am mechanischen Teil (2) des Gehäuses (1) angebracht ist.

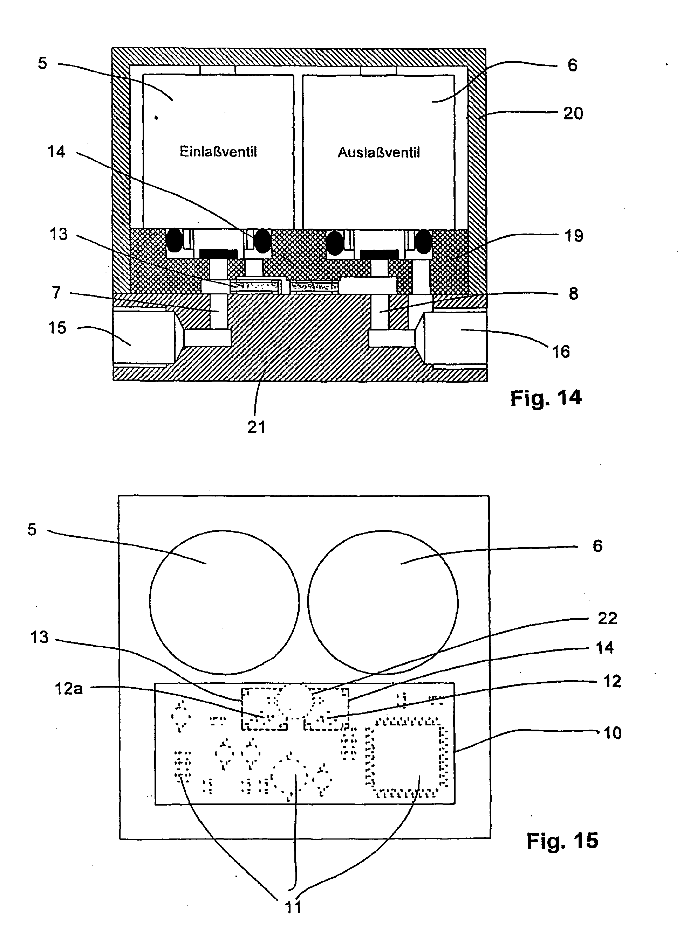

Unter dem gemeinsamen Deckel (20) ist ein Magnetventil-Paar (5, 6) (vergl. Fig 14) angeordnet, das aus einem Einlassventil (5) und einem Auslassventil (6) besteht. Sichtbar ist hier nur das Einlassventil (5), welches ein Ventilschliessglied (31) aufweist, das mittels einer Dichtung (32) einen Ventilsitz (27) abdichten kann. Hierdurch lässt sich ein Durchgang für Druckluft oder ein Fluid öffnen oder schließen.

Anstelle von Magnetventilen sind auch anders angetriebene Ventile, z.B. Piezo-Ventile, möglich. Es ist auch möglich, dass die Mechatronik in ihrem mechanischen Teil (2) Aktuatoren und/oder Motoren aufweist, welche ebenfalls vom elektronischen Teil (3) steuerbar sind (nicht dargestellt).

Zum Anschluss der Ventile an äußere Druckleitungen ist mindestens ein Druckanschluss (16) vorgesehen, der sich im Unterteil (21) des Gehäuses (1) befindet. Zum Anschluss des Druckanschlusses (16) an den Ventilsitz (27) ist ein Druckführungskanal (7) vorgesehen.

Die Ventil-Anordnung samt zugehörigen Druckführungskanälen ist nur schematisch gezeichnet. Sie kann z.B. dazu dienen, einen Druck in einem Behälter zu steigern, abzusenken, oder zu halten. Die Druckführungskanäle (7, 8, 9) (siehe Fig. 12 bis 14) können sowohl einen runden als auch einen rechteckigen Querschnitt haben.

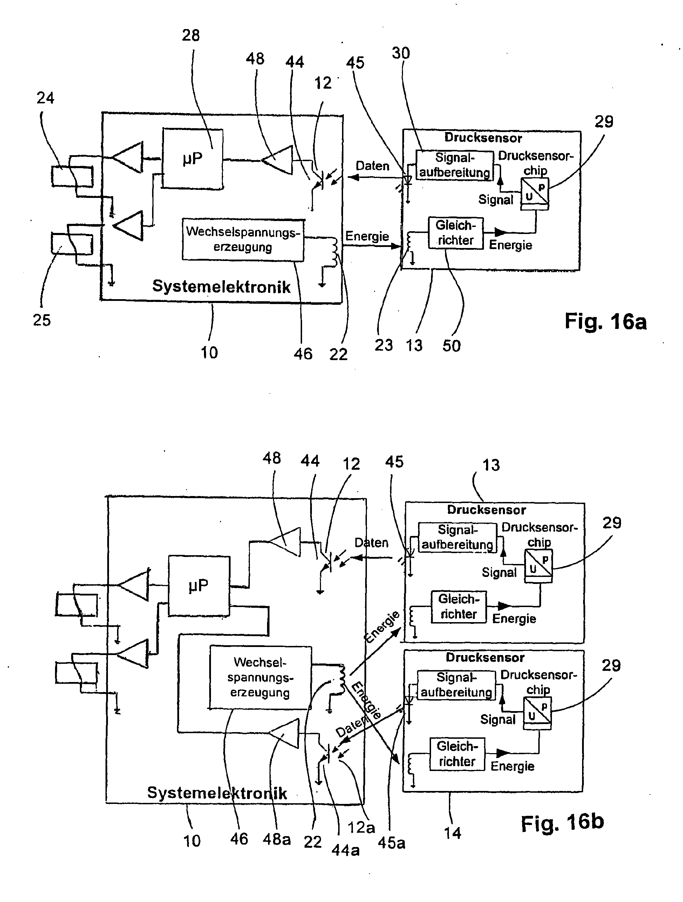

In dem Druckführungskanal (9) oder in einem mit diesem verbundenen Hohlraum befindet sich ein Sensor-Modul (13). Dieses besteht im wesentlichen (vergl. Fig. 16a) aus einem Drucksensor (29), einer Signalaufbereitung (30), einem lichtemittierenden Element (45), einer Energie-Empfangsspule (23), und einem Gleichrichter (50). Das Sensor-Modul (13) ist durch geeignete Maßnahmen innerhalb des Druckführungskanals (9) befestigt.

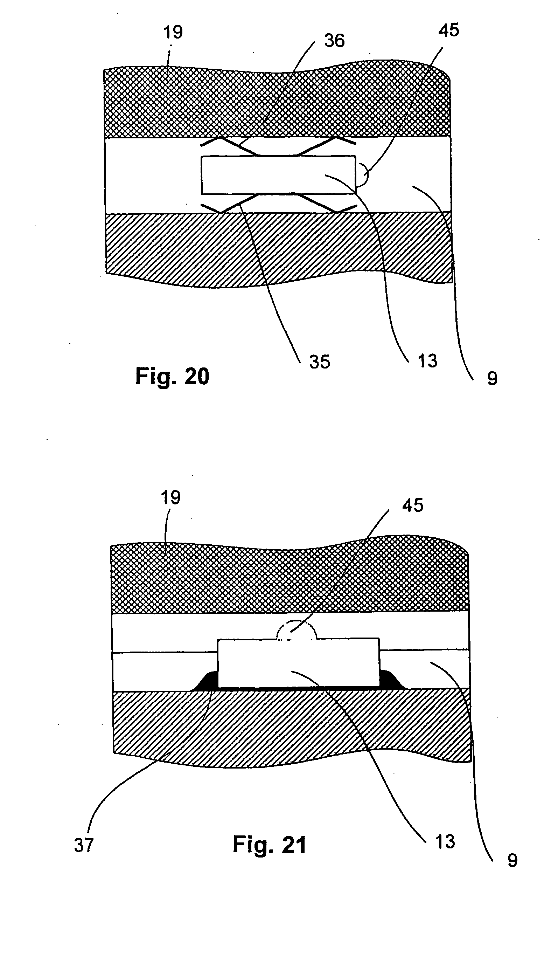

Das Sensor-Modul (13) mit dem lichtemittierenden Element (45) kann beispielsweise durch eine Klemmkraft an seinem Ort gehalten werden (vergl. Fig. 20). Hierzu ist es mit Federn (35, 36) ausgestattet, die sich an den Innenwänden eines der Druckführungskanäle (7, 8, 9) abstützen. Die Innenwand des Druckführungskanals kann flach oder rund ausgebildet sein. Ein Lichtaustritt nach aussen wird durch eine lichtdurchlässige Zwischenplatte (19) ermöglicht.

Auch eine Befestigung des Sensormoduls (13) an den Wänden eines der Druckführungskanäle (7, 8, 9) mittels eines Klebstoffes (37) ist möglich (vergl. Fig. 21).

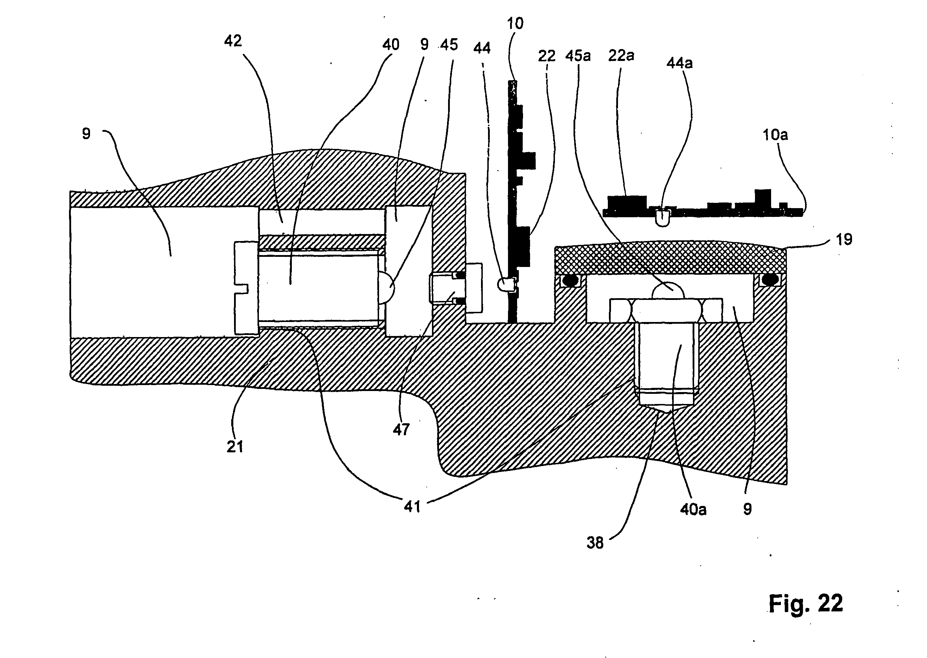

Gemäß Fig. 22 kann zweckmässig ein zylindrisches Sensormodul (40a) auch mit einem zylinderförmigen Gehäuse mit Aussengewinde (41) versehen sein, mit welchem es in ein von einem Druckführungskanal (7, 8, 9) ausgehenden Sackloch (38) eingeschraubt ist (vergl. Fig. 22 rechts).

Es ist weiter auch möglich, das zylinderförmige Sensor-Modul (40) mittels des Gewindes (41) in eine Durchgangsbohrung zwischen zwei Druckführungskanälen (9, 9a) einzuschrauben (vergl. Fig 22 links). Dabei muß, z.B. mit einer Parallel-Bohrung (42), für eine Durchgängigkeit für das Druckmittel gesorgt werden.

Die Fig. 22 enthält weiter zwei Elektronikplatinen (10, 10a), die mit lichtempfindlichen Elementen (44, 44a) versehen sind. Diese empfangen Daten von zwei lichtemittierenden Elementen (45, 45a) der Sensor -Module (40, 40a).

Die Datenübertragung des linken Sensor-Moduls (40) erfolgt durch ein IR-lichtdurchlässiges Teil (47), das in das lichtundurchlässige Unterteil (21) druckdicht eingeschraubt ist.

Die Datenübertragung des rechten Sensor-Moduls (40a) erfolgt durch eine IR-durchlässige Zwischenplatte (19).

Der Druckführungskanal (9) wird in der Fig. 12 teilweise durch eine Zwischenplatte (19) gebildet, die aus einem nicht metallischen Material, beispielsweise einem Kunststoff, besteht. Dieser ist zumindest teilweise aus IR-durchlässigem Material. Dagegen sind der mechanische Teil (2), also das Unterteil (21) mit den Druckführungskanälen (7, 9) sowie dem Druckanschluß (16) und auch der Deckel (20), vorzugsweise aus Metall, beispielsweise Aluminium, ausgebildet.

Es ist aber auch möglich, das gesamte Mechatronik-Gehäuse (1) aus Kunststoff zu fertigen.

Die Druckführungskanäle (7, 8, 9) können beliebig gestaltet sein. Sie können als Bohrungen, beliebig gestaltete Hohlräume oder auch als Sackbohrungen ausgeführt sein, in welche der Sensor eingeschraubt ist.

Gemäß Fig. 12 enthält der elektronische Teil (3) des Gehäuses (1) eine Elektronikplatine (Systemelektronik) (10), welche mit elektronischen Bauteilen (11) bestückt ist. Zu diesen gehört auch ein lichtempfindliches Element (44), welches drahtlos mittels IR-Licht von dem auf dem Sensor-Modul (13) angeordneten lichtemittierenden Element (45) Daten empfangen kann (vergl. Fig. 16a bis 16c).

Die Elektronikplatine (Systemelektronik) (10) enthält weiter eine Sendespule (22) zur Versorgung des Sensor-Moduls (13) mit elektrischer Energie. Hierzu enthält das Sensor-Modul (13) eine Empfangsspule (23) (vergl. Fig. 16a).

Die drahtlose Übertragung von elektrischen Daten mittels IR-Licht wird durch eine Ausbildung der Zwischenplatte (19) aus zumindest teilweise lichtdurchlässigem Kunststoff ermöglicht. Auch ein Einsatz von separaten, lichtleitenden Teilen (47) ist möglich, welche das lichtundurchlässige Gehäuse-Unterteil (21) durchdringen (vergl. Fig. 22).

Zum Anschluss des elektronischen Teils (3) an weitere, z. B. in einem Fahrzeug befindliche, Elektroniken ist die Elektronikplatine (10) an einen elektrischen Anschlussstecker (17) mit einem Anschlusskabel (18) angeschlossen.

Die Fig. 13 zeigt einen Schnitt durch das Mechatronik-Gehäuse (1) der Fig. 12 in Höhe der Elektronik-Platine (10). Wie man sieht, befinden sich auf der Elektronik-Platine (10) elektronische Bauteile (11), einschließlich eines Mikroprozessors (28) und zweier Lesestationen (12, 12a). Letztere kommunizieren drahtlos mit zwei Sensor-Modulen (14, 13). Diese sind in Druckführungskanälen (9) angeordnet, die je nach Bedarf unterschiedlich geformt sein können. Die Druckführungskanäle (9) sind ganz oder teilweise in der aus zumindest teilweise lichtdurchlässigem Isolierstoff bestehenden Zwischenplatte (19) (siehe Fig. 12) angeordnet.

Als Lesestation (12, 12a) wird die Einheit aus lichtempfindlichem Element (44, 44a) und Verstärker (48, 48a) (vergl. Fig. 16b) bezeichnet. Gegebenenfalls können die Verstärker (48, 48a) auch entfallen.

Die Fig. 14 zeigt einen anderen Schnitt durch das Mechatronik-Gehäuse (1) der Fig. 12. Erkennbar sind hier zwei Magnetventile (5, 6), die als Einlassventil bzw. Auslassventil arbeiten. Erkennbar sind weiterhin zwei Sensor-Module (13, 14), welche hier in einem Zwischenraum zwischen der Zwischenplatte (19) und dem metallischen Unterteil (21) des Mechatronik-Gehäuses (1) angeordnet sind. Weiterhin sind zwei Druckanschlüsse (15, 16) zum Anschluss der Mechatronik an eine Druckluftanlage oder an eine hyraulische Anlage erkennbar.

Die Fig. 15 zeigt einen weiteren Schnitt durch die Mechatronik in Höhe der Elektronik-Platine (10). Erkennbar sind wiederum die beiden Magnetventile (5, 6), die Bestückung der Elektronikplatine (10) mit elektronischen Bauteilen (11), die Sensor-Module (13, 14), sowie die diesen zugeordneten benachbarten Lesestationen (12, 12a). Auf der Platine (10) ist weiter eine gemeinsame Energie-Sendespule (22) angeordnet.

Die Fig. 16a bis 16c zeigen schematische Darstellungen der Energie- und Datenübertragung zwischen der sich auf der Elektronik-Platine (10) befindlichen Steuerelektronik bzw. Systemelektronik und Sensor-Modulen (13, 14).

In der Fig. 16a enthält die Elektronik-Platine (Systemelektronik) (10) neben weiteren hier nicht dargestellten Bauteilen die Lesestation (12) mit einem lichtempfindlichen Element (44), hier ein Fototransistor, und den Mikroprozessor (28). An die Platine (10) sind weiter Magnetwicklungen (24, 25) der Magnetventile (5, 6) angeschlossen. An eine Wechselspannungserzeugung (46) ist eine Sendespule (22) zur Energieübertragung angeschlossen, die beispielsweise als eine auf die Elektronik-Platine (10) gedruckte Spule ausgebildet sein kann.

Auf dem zugehörigen Sensor-Modul (13) ist ein Drucksensor (29) angeordnet, dessen Ausgangssignal einer Signalaufbereitung (30) zugeführt wird. An diese ist zur Datenübertragung zur Lesestation (12) ein lichtemittierendes Element (45), hier eine IR-Leuchtdiode, angeschlossen.

Zur Energieversorgung des Drucksensors (29) dient eine Empfangsspule (23), die ebenfalls als eine auf eine Platine gedruckte Spule ausgebildet sein kann, und die ihre Energie auf induktivem Wege von der Sendespule (22) erhält. An die Empfangsspule (23) ist ein Gleichrichter (50) angeschlossen. Zur Energie-Zwischenspeicherung kann im Gleichrichter (50) ein Kondensator oder eine Batterie (Akku) enthalten sein (nicht dargestellt).

Durch zwischen der Elektronik-Platine (Systemelektronik) (10) und dem Sensor-Modul (13) befindliche Pfeile ist angedeutet, dass im Betrieb, dh. falls ein Messwert gewünscht wird, zunächst eine Energieübertragung mittels eines Sende-Impulses von der Wechselspannungserzeugung (46) zum Sensor-Modul (13) und anschliessend eine Rückübertragung von Daten, also hier von Druckwerten, über das lichtemittierende Element (45) erfolgt. Je nach Bauart des Sensor-Moduls (13) können Energieübertragung und Datenrückübertragung auch gleichzeitig erfolgen.

In der Fig. 16b werden von zwei Sensor-Modulen (13, 14) Signale zur Elektronikplatine (Systemelektronik) (10) übertragen. Die Energieversorgung für beide Module erfolgt über eine gemeinsame Wechselspannungserzeugung (46) mit gemeinsamer Sendespule (22). Eine gemeinsame Energieübertragung bietet sich an, wenn die zu versorgenden Sensor-Module nicht zu weit entfernt angeordnet sind. Die Datenrückübertragung erfolgt für jedes Sensor-Modul getrennt auf zwei Lesestationen (12, 12a) mit je einem lichtempfindlichen Element (44, 44a).

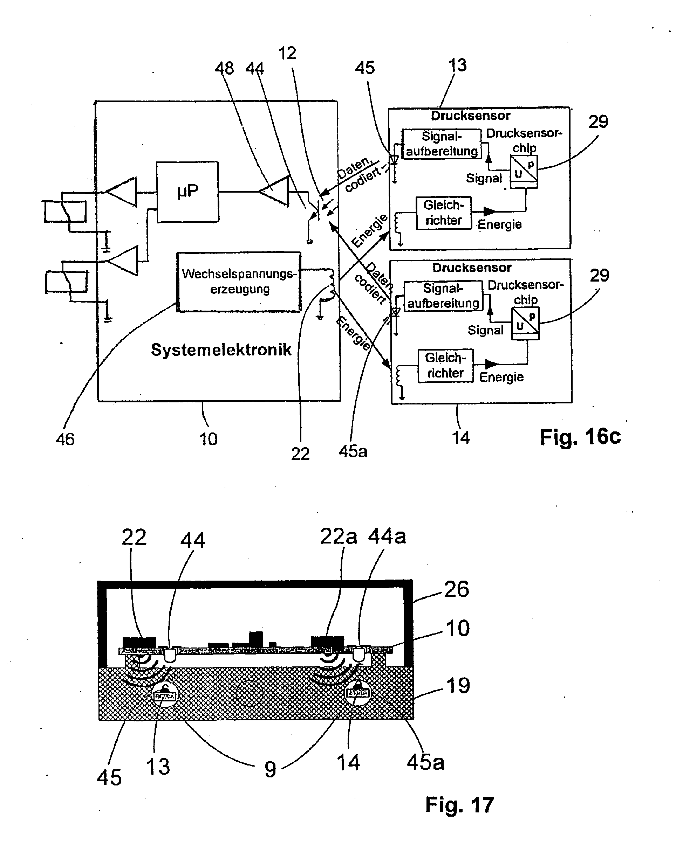

Wie in der Fig. 16c dargestellt ist, können bei zwei Sensor-Modulen (13, 14) mit zwei lichtemittierenden Elementen (45, 45a) bei der Datenrückübertragung neben den eigentlichen Druck-Daten auch codierte Signale zur Identifikation des antwortenden Sensor-Moduls (13, 14) rückübertragen werden. In diesem Fall ist nur eine gemeinsame Lesestation (12) mit nur einem lichtempfindlichen Element (44) auf der Elektronikplatine (Systemelektronik). (10) notwendig. Die Energie-Übertragung zu den Sensor-Modulen (13, 14) erfolgt mittels einer gemeinsamen Wechselspannungserzeugung (46) mit gemeinsamer Sendespule (22).

Es ist auch möglich, zusätzlich auch den Energie-Sendeimpuls zu kodieren, z.B. durch Verwendung unterschiedlicher Frequenzen der Wechselspannungserzeugung (46). Hierdurch ist eine getrennte Anregung der verschiedenen Sensor-Module, von denen ein Messwert benötigt wird, möglich, wodurch Energie eingespart werden kann.

Die Fig. 17 enthält zwei Schaltungen des Typs der Fig. 16a, und zeigt in schematischer Darstellung die Elektronikplatine (Systemelektronik) (10), die hier in ein separates Elektronikgehäuse (26) eingebaut ist. Auf der Elektronikplatine (10) sind zwei Sendespulen (22, 22a) angeordnet, die zu zwei Sensor-Modulen (13, 14) Energie übertragen. Eine Verwendung getrennter Energie-Sendespulen bietet sich an, wenn die zu versorgenden Module weiter voneinander entfernt sind.

Die Platine (10) enthält weiter zwei lichtempfindliche Elemente (44, 44a), welche von den Sensor-Modulen (13, 14) Daten empfangen. Die Sensor-Module (13, 14) sind direkt innerhalb der Druckführungskanäle (9), die hier rohrförmig ausgebildet sind, angeordnet. Dabei muß natürlich ein ausreichender Querschnitt für den Durchfluss des Druckmittels frei bleiben.

Die Daten-Rückübertragung erfolgt über IR-lichtemittierende Elemente (45, 45a) der Sensor-Module (13, 14) zu den lichtempfindlichen Elementen (44, 44a).

Um einen Lichtempfang zu ermöglichen, ist die Platine (10) im Bereich der lichtempfindlichen Elemente (44, 44a) mit Durchbrüchen bzw. Bohrungen versehen, und die lichtempfindlichen Elemente (44, 44a) sind nach unten durchgesteckt. Die Zwischenplatte (19) ist aus IRlichtdurchlässigem Material.

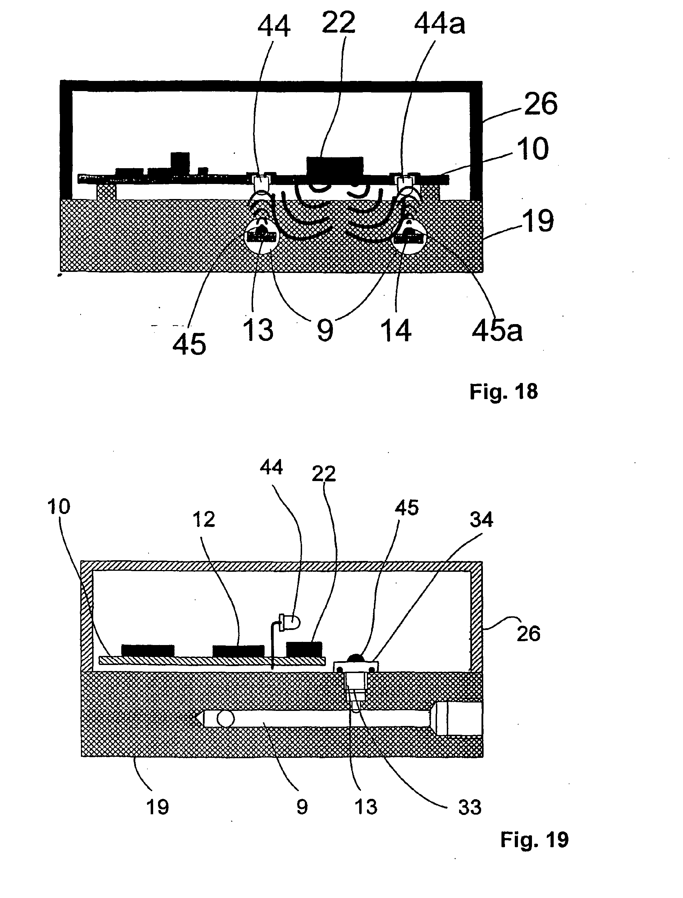

Die Fig. 18, korrespondierend zur Schaltung der Fig. 16b, zeigt wie in der Fig. 17 eine in einem Elektronikgehäuse (26) eingebaute Elektronik-Platine (10), die hier aber mit nur einer einzigen, gemeinsamen Energie-Sendespule (22) ausgerüstet ist. Über die einzige Sendespule (22) wird zwei Sensor-Modulen (13, 14) bei Bedarf oder dauernd Energie zugeführt. Falls zeitweilig keine Sensor-Daten benötigt werden, kann die Energieübertragung zur Energieeinsparung auch gestoppt werden.

Die Daten-Übertragung erfolgt wieder über die lichtemittierenden Elemente (45, 45a) auf zwei lichtempfindliche Elemente (44, 44a).

Zur Unterscheidung der Rückantworten der beiden Sensor-Module (13, 14) ist auch eine zusätzliche Übertragung von entsprechenden Codierungen der Ausgangssignale der Sensor-Module (13, 14) möglich. Eine solche Codierung kann z.B. durch unterschiedliche Datencodes bei der Rückübertragung der Messwerte erfolgen.

In der Fig. 19 ist ein weiteres Ausführungsbeispiel der Erfindung gezeigt, bei dem das Sensor-Modul (13) nur teilweise in einem Druckführungskanal (9) angeordnet ist. Dabei ragt ein sensierender Teil (33) des Sensor-Moduls (13) in den Druckführungskanal (9) hinein, während ein sendender bzw. empfangender Teil (34) innerhalb des Elektronikgehäuses (26), in unmittelbarer Nähe der Lesestation (12) mit Sendespule (22) angeordnet ist. Die Datenübertragung des Meßwertes erfolgt auch hier von einem lichtemittierenden Element (45) des Sensor-Moduls (13) zu einem lichtempfindlichen Element (44), das an eine Lesestation (12) angeschlossen ist.

Diese Variante hat den Vorteil, dass die Zwischenplatte (19) nicht aus IR-durchlässigem Isoliermaterial zu bestehen braucht. Demgegenüber wird aber mehr Platz im Elektronikgehäuse (26) benötigt. Ausserdem besteht weniger Freiheit bezüglich der Anordnung der Druckführungskanäle (9), die hier unmittelbar unterhalb des Elektronikgehäuses (26) liegen müssen. Weiter muss eine ausreichend druckfeste Abdichtung des Sensor-Moduls (13) gegenüber der Zwischenplatte (19) gewährleistet sein.

Die Fig. 20, 21, und 22 wurden bereits oben erläutert.

In allen Ausführungsbeispielen sind zweckmäßig die Lesestationen (12, 12a) und die Sensor-Module (13, 14) in unmittelbarer räumlicher Nähe zueinander angeordnet. Dies hat den Vorteil, dass die Sendeleistungen der Wechselspannungserzeugungen (46) zur Energieübertragung sowie die Energie-Sende- und -Empfangsspulen (22, 23) klein ausgebildet werden können. Unter "unmittelbarer räumlicher Nähe" ist hier eine Entfernung von etwa 1 bis 5 cm, je nach Grösse der Mechatronik, zu verstehen.

Durch die Sensor-Module (13, 14) können neben Drücken auch andere physikalische Größen sensiert und übertragen werden. Denkbar ist hier eine Daten-Übertragung von Temperaturen, von Massendurchsätzen (beispielsweise Druckluftmengen oder Fluidmengen), von Wegen (beispielsweise Wegen von Ventilgliedern), von magnetischen Feldstärken (beispielsweise Feldstärken der Magnetwicklungen der Magnetventile), oder von der chemischen Zusammensetzung des in den Druckführungskanälen fliessenden Gases oder Fluids.

Zur Erfassung von Drücken können je nach Bedarf Absolutwert-Sensoren oder auch Differenzdruck-Sensoren eingesetzt werden. Letztere können insbesondere in der Ausführung nach der Fig. 19 die Druckdifferenz zwischen einem Druckführungskanal (9) und dem Inneren eines Elektronikgehäuses (26) erfassen. Dagegen sind vollständig in Druckführungskanälen eingebaute Drucksensoren als Absolutwert-Drucksensoren ausgebildet.

Ein Einsatz von beliebig vielen Sensoren innerhalb einer Mechatronik ist möglich, wobei die sich die oben erläuterten Vorteile des Verfahrens zur Datenübertragung desto stärker auswirken, je mehr Sensoren integriert sind.

Ein Vorteil einer Datenübertragung mit Leuchtdioden gegenüber einer auch möglichen Verwendung von Transpondern ist neben der besseren Störfestigkeit auch eine grössere erzielbare Dynamik der Übertragung. Das bedeutet, daß ein Meßwert bei Bedarf schneller zur Verfügung steht.

Als lichtemittierende Elemente werden vorzugsweise Infrarot-Leuchtdioden (IR-LED) verwendet. Diese sind bereits seit längerem bekannt bzw. genormt und somit als ausreichend zuverlässig und preisgünstig anzusehen. Eine Datenübertragung mittels IR-Leuchtdioden ist z.B. aus der Fernbedienung von Fernsehempfängern bekannt und bewährt.

IR-LED's haben gegenüber anderen LED's mit Ausstrahlung im sichtbaren Bereich den Vorteil, dass eine sichere Datenübertragung auch bei verschmutzten Innenflächen der Druckführungskanäle (9) gewährleistet ist.

Anstelle von IR-LED's können auch Laserdioden verwendet werden. Diese können insbesondere da eingesetzt werden, wo es auf eine grössere Reichweite ankommt.

Als lichtempfindliche Elemente können beispielsweise Fototransistoren oder Fotodioden eingesetzt werden.

## Patentansprüche

1. Mechatronik, insbesondere Ventil-Anordnung, mit einem Gehäuse (1), das einen mechanischen Teil (2) und einen elektronischen Teil (3) umfasst, wobei der mechanische Teil (2) mindestens aus einem oder mehreren Magnetventilen (5, 6) sowie aus an die Magnetventile (5, 6) angeschlossenen Druckführungskanälen (7, 8, 9) besteht, wobei der elektronische Teil (3) aus einer Steuerelektronik mit mindestens einer in einem Hohlraum des Gehäuses (1) oder in einem am Gehäuse (1) angebrachten separaten Elektronikgehäuse (26) angeordneten Platine (10) mit elektronischen Bauteilen (11) besteht, und wobei in einem oder mehreren der Druckführungskanäle (7, 8, 9) oder in mit diesen verbundenen Hohlräumen Sensor-Module (13, 14, 40, 40a) zur Messung physikalischer Größen eingebaut sind, **dadurch gekennzeichnet, dass** die Sensor-Module drahtlos mittels lichtemittierender Elemente (45, 45a) mit mindestens einer auf der Platine (10) angeordneten Lesestation (12, 12a) kommunizieren.

2. Mechatronik nach Anspruch 1, **dadurch gekennzeichnet, dass** die physikalischen Größen Drücke, Temperaturen, Massendurchsätze, Wege, magnetische Feldstärken oder chemische Zusammensetzungen sind.

3. Mechatronik nach Anspruch 1 bis 2, **dadurch gekennzeichnet, dass** der mechanische Teil (2) des Gehäuses (1) ganz oder teilweise aus Kunststoff besteht.

4. Mechatronik nach einem oder mehreren der Ansprüche 1 bis 3, **dadurch gekennzeichnet, dass** zwischen dem elektronischen Teil (3) und dem die Druckführungskanäle (7, 8, 9) enthaltenden mechanischen Teil (2) des Gehäuses (1) eine Zwischenplatte (19) aus Kunststoff eingebaut ist, die ganz oder teilweise lichtdurchlässig ist.

5. Mechatronik nach einem oder mehreren der Ansprüche 1 bis 4, **dadurch gekennzeichnet, dass** zur besseren Lichtübertragung zwischen den lichtemittierenden Elementen (45, 45a) und den lichtempfindlichen Elementen (44, 44a) mindestens ein lichtleitendes Teil (47) angeordnet ist.

6. Mechatronik nach Anspruch 5, **dadurch gekennzeichnet, dass** die Druckführungskanäle (7, 8, 9) ganz oder teilweise durch die Zwischenplatte (19) gebildet werden.

7. Mechatronik nach einem oder mehreren der Ansprüche 1 bis 6, **dadurch gekennzeichnet, dass** die Lesestationen (12, 12a) und die Sensor-Module (13, 14, 40, 40a) in räumlicher Nähe zueinander angeordnet sind.

8. Mechatronik- nach einem oder mehreren der Ansprüche 1 bis 7, **dadurch gekennzeichnet, dass** für jedes Sensor-Modul (13, 14, 40, 40a) eine eigene Lesestation (12, 12a) vorgesehen ist.

9. Mechatronik nach einem oder mehreren der Ansprüche 1 bis 7, **dadurch gekennzeichnet, dass** für alle Sensor-Module (13, 14, 40, 40a) eine gemeinsame Lesestation (12) vorgesehen ist.

10. Mechatronik nach einem oder mehreren der Ansprüche 1 bis 9, **dadurch gekennzeichnet, dass** für alle Sensor-Module (13, 14, 40, 40a) eine getrennte Energieversorgung mittels getrennten Sendespulen (22, 22a) vorgesehen ist.

11. Mechatronik nach einem oder mehreren der Ansprüche 1 bis 9, **dadurch gekennzeichnet, dass** für alle Sensor-Module (13, 14, 40, 40a) eine gemeinsame Energieversorgung mittels einer gemeinsamen Sendespule (22) vorgesehen ist.

12. Mechatronik nach einem oder mehreren der Ansprüche 1 bis 11, **dadurch gekennzeichnet, dass** die Sensor-Module (13, 14, 40, 40a) codierte Daten zurücksenden.

13. Mechatronik nach einem oder mehreren der Ansprüche 1 bis 12, **dadurch gekennzeichnet, dass** die Sensor-Module (13, 14) in die Druckführungskanäle (7, 8, 9) eingesteckt sind und durch eine Klemmkraft in Position gehalten werden.

14. Mechatronik nach Anspruch 13, **dadurch gekennzeichnet, dass** die Klemmkraft durch Federn (35, 36) erzeugt wird, die sich an den Innenwänden der Druckführungskanäle (9) abstützen.

15. Mechatronik nach einem oder mehreren der Ansprüche 1 bis 12, **dadurch gekennzeichnet, dass** die Sensor-Module (13, 14) mittels eines Klebstoffes (37) an eine Wand eines Druckführungskanals (7, 8, 9) angeklebt sind.

16. Mechatronik nach einem oder mehreren der Ansprüche 1 bis 12, **dadurch gekennzeichnet, dass** zylinderförmige Sensor-Module (40, 40a) mit Aussengewinde (41) verwendet werden, die in Sacklöcher (38) oder Durchgangsbohrungen (39) der Druckführungskanäle (9) eingeschraubt sind.

17. Mechatronik nach einem oder mehreren der Ansprüche 1 bis 16, **dadurch gekennzeichnet, dass** die Sensor-Module (13, 14, 40, 40a) so eingebaut sind, dass nur der den Messwert sensierende Teil (33) im Druckführungskanal (7, 8, 9) angeordnet ist, während der sendende bzw. empfangende Teil (34) innerhalb des Elektronikgehäuses (26) angeordnet ist.

18. Mechatronik nach einem oder mehreren der Ansprüche 1 bis 17, **dadurch gekennzeichnet, dass** als in den Sensor-Modulen (13, 14, 40, 40a) eingebaute Drucksensoren (29) Differenz- oder Absolutwert-Drucksensoren verwendet werden.

19. Mechatronik nach einem oder mehreren der Ansprüche 1 bis 18, **dadurch gekennzeichnet, dass** als lichtemittierende Elemente (45, 45a) Infrarot-Leuchtdioden (IR-LED) oder Laserdioden vorgesehen sind, welche mindestens teilweise codierte Signale an mindestens ein lichtempfindliches Element (44, 44a) senden.

20. Mechatronik nach Anspruch 19, **dadurch gekennzeichnet, dass** als lichtempfindliche Elemente (44, 44a). Fototransistoren oder Fotodioden vorgesehen sind.

## Claims

1. Mechatronic device, in particular valve arrangement, having a housing (1) which comprises a mechanical part (2) and an electronic part (3), with the mechanical part (2) consisting at least of one or more solenoid valves (5, 6) and of pressure guide channels (7, 8, 9) which are connected to the solenoid valves (5, 6), with the electronic part (3) consisting of a control electronics system having at least one printed circuit board (10), which is arranged in a cavity in the housing (1) or in a separate electronics housing (26) which is attached to the housing (1) and has electronics components (11), and with sensor modules (13, 14, 40, 40a) for measuring physical variables being incorporated in one or more of the pressure guide channels (7, 8, 9) or in cavities which are connected to the said pressure guide channels, **characterized in that** the sensor modules communicate with at least one reading station (12, 12a), which is arranged on the printed circuit board (10), in a wireless manner by means of light-emitting elements (45, 45a).

2. Mechatronic device according to Claim 1, **characterized in that** the physical variables are pressures, temperatures, mass throughput rates, distances travelled, magnetic field strengths or chemical compositions.

3. Mechatronic device according to Claims 1 and 2, **characterized in that** the mechanical part (2) of the housing (1) consists completely or partially of plastic.

4. Mechatronic device according to one or more of Claims 1 to 3, **characterized in that** a plastic intermediate plate (19) which is completely or partially transparent is incorporated between the electronics part (3) and the mechanical part (2), which contains the pressure guide channels (7, 8, 9), of the housing (1).

5. Mechatronic device according to one or more of Claims 1 to 4, **characterized in that** at least one light-guiding part (47) is arranged between the light-emitting elements (45, 45a) and the light-sensitive elements (44, 44a) for improving the transmission of light.

6. Mechatronic device according to Claim 5, **characterized in that** the pressure guide channels (7, 8, 9) are completely or partially formed by the intermediate plate (19).

7. Mechatronic device according to one or more of Claims 1 to 6, **characterized in that** the reading stations (12, 12a) and the sensor modules (13, 14, 40, 40a) are arranged physically close to one another.

8. Mechatronic device according to one or more of Claims 1 to 7, **characterized in that** a dedicated reading station (12, 12a) is provided for each sensor module (13, 14, 40, 40a).

9. Mechatronic device according to one or more of Claims 1 to 7, **characterized in that** a common reading station (12) is provided for all the sensor modules (13, 14, 40, 40a).

10. Mechatronic device according to one or more of Claims 1 to 9, **characterized in that** a separate power supply by means of separate transmission coils (22, 22a) is provided for all the sensor modules (13, 14, 40, 40a).

11. Mechatronic device according to one or more of Claims 1 to 9, **characterized in that** a common power supply by means of a common transmission coil (22) is provided for all the sensor modules (13, 14, 40, 40a).

12. Mechatronic device according to one or more of Claims 1 to 11, **characterized in that** the sensor modules (13, 14, 40, 40a) send back encoded data.

13. Mechatronic device according to one or more of Claims 1 to 12, **characterized in that** the sensor modules (13, 14) are inserted into the pressure guide channels (7, 8, 9) and are held in position by a clamping force.

14. Mechatronic device according to Claim 13, **characterized in that** the clamping force is generated by springs (35, 36) which are supported on the inner walls of the pressure guide channels (9).

15. Mechatronic device according to one or more of Claims 1 to 12, **characterized in that** the sensor modules (13, 14) are adhesively bonded to a wall of a pressure guide channel (7, 8, 9) by means of an adhesive (37).

16. Mechatronic device according to one or more of Claims 1 to 12, **characterized in that** cylindrical sensor modules (40, 40a) with external threads (41) are used, said cylindrical sensor modules being screwed into blind holes (38) or passage bores (39) in the pressure guide channels (9).

17. Mechatronic device according to one or more of Claims 1 to 16, **characterized in that** the sensor modules (13, 14, 40, 40a) are incorporated such that only that part (33) which senses the measured value is arranged in the pressure guide channel (7, 8, 9), while the transmitting and receiving part (34) is arranged within the electronics housing (26).

18. Mechatronic device according to one or more of Claims 1 to 17, **characterized in that** differential or absolute value pressure sensors are used as pressure sensors (29) which are incorporated in the sensor modules (13, 14, 40, 40a).

19. Mechatronic device according to one or more of Claims 1 to 18, **characterized in that** infrared light-emitting diodes (IR-LEDs) or laser diodes, which transmit at least partially encoded signals to at least one light-sensitive element (44, 44a), are provided as light-emitting elements (45, 45a).

20. Mechatronic device according to Claim 19, **characterized in that** phototransistors or photodiodes are provided as light-sensitive elements (44, 44a).

## Revendications

1. Dispositif mécatronique, en particulier système de soupape,
présentant un boîtier (1) qui comporte une partie mécanique (2) et une partie électronique (3),
la partie mécanique (2) étant au moins constituée d'une ou plusieurs soupapes magnétiques (5, 6) ainsi que de canaux (7, 8, 9) de raccordement à la pression raccordés aux soupapes magnétiques (5, 6),
la partie électronique (3) étant constituée d'une électronique de commande dotée d'au moins une carte de circuit (10) dotée de composants électroniques (11) et disposée dans une cavité du boîtier (1) ou dans un boîtier électronique (26) séparé et placé sur le boîtier (1),
des modules de détecteur (13, 14, 40, 40a) destinés à mesurer des grandeurs physiques étant montés dans un ou plusieurs des canaux (7, 8, 9) de raccordement à la pression ou dans des cavités reliées à ces derniers,
**caractérisé en ce que**
les modules de détecteur communiquent sans fil au moyen d'éléments (45, 45a) émetteurs de lumière avec au moins un poste de lecture (12, 12a) disposé sur la carte de circuit (10).

2. Dispositif mécatronique selon la revendication 1, **caractérisé en ce que** les grandeurs physiques sont des pressions, des températures, des débits massiques, des parcours, des intensités de champ magnétique ou des composés chimiques.

3. Dispositif mécatronique selon les revendications 1 et 2, **caractérisé en ce que** la partie mécanique (2) du boîtier (1) est constituée en tout ou en partie de matière synthétique.

4. Dispositif mécatronique selon l'une ou plusieurs des revendications 1 à 3, **caractérisé en ce qu'**une plaque intermédiaire (19) en matière synthétique qui est totalement ou partiellement transparente à la lumière est montée entre la partie électronique (3) et la partie mécanique (2) du boîtier (1) qui contient les canaux (7, 8, 9) de raccordement à la pression.

5. Dispositif mécatronique selon l'une ou plusieurs des revendications 1 à 4, **caractérisé en ce qu'**au moins une partie (47) de guidage de lumière est prévue pour permettre une meilleure transmission de la lumière entre les éléments (45, 45a) émetteurs de lumière et les éléments (44, 44a) sensibles à la lumière.

6. Dispositif mécatronique selon la revendication 5, **caractérisé en ce que** les canaux (7, 8, 9) de raccordement à la pression sont formés en tout ou en partie à travers la plaque intermédiaire (19).

7. Dispositif mécatronique selon l'une ou plusieurs des revendications 1 à 6, **caractérisé en ce que** les postes de lecture (12, 12a) et le module de détecteur (13, 14, 40, 40a) sont disposés à proximité spatiale mutuelle.

8. Dispositif mécatronique selon l'une ou plusieurs des revendications 1 à 7, **caractérisé en ce qu'**un poste de lecture (12, 12a) propre est prévu pour chaque module de détecteur (13, 14, 40, 40a).

9. Dispositif mécatronique selon l'une ou plusieurs des revendications 1 à 7, **caractérisé en ce qu'**un poste de lecture commun (12) est prévu pour tous les modules de détecteur (13, 14, 40, 40a).

10. Dispositif mécatronique selon l'une ou plusieurs des revendications 1 à 9, **caractérisé en ce que** des alimentations séparées en énergie au moyen de bobines émettrices (22, 22a) respectives sont prévues pour les modules de détecteur (13, 14, 40, 40a).

11. Dispositif mécatronique selon l'une ou plusieurs des revendications 1 à 9, **caractérisé en ce qu'**une alimentation commune en énergie au moyen d'une bobine émettrice (22) commune est prévue pour tous les modules de détecteur (13, 14, 40, 40a).

12. Dispositif mécatronique selon l'une ou plusieurs des revendications 1 à 11, **caractérisé en ce que** les modules de détecteur (13, 14, 40, 40a) renvoient des données codées.

13. Dispositif mécatronique selon l'une ou plusieurs des revendications 1 à 12, **caractérisé en ce que** les modules de détecteur (13, 14) sont enfichés dans les canaux (7, 8, 9) de raccordement à la pression et sont maintenus en position par une force de serrage.

14. Dispositif mécatronique selon la revendication 13, **caractérisé en ce que** la force de serrage est appliquée par des ressorts (35, 36) qui s'appuient sur les parois intérieures des canaux (9) de raccordement à la pression.

15. Dispositif mécatronique selon l'une ou plusieurs des revendications 1 à 12, **caractérisé en ce que** les modules de détecteur (13, 14) sont collés sur une paroi d'un canal (7, 8, 9) de raccordement à la pression au moyen d'un adhésif (37).

16. Dispositif mécatronique selon l'une ou plusieurs des revendications 1 à 12, **caractérisé en ce que** les modules de détecteur (40, 40a) de forme cylindrique sont dotés d'un filet extérieur (41) qui est vissé dans des trous aveugles (38) ou des perforations (39) des canaux (9) de raccordement à la pression.

17. Dispositif mécatronique selon l'une ou plusieurs des revendications 1 à 16, **caractérisé en ce que** les modules de détecteur (13, 14, 40, 40a) sont montés de telle sorte que seule la partie (33) qui détecte la valeur de mesure est disposée dans le canal (7, 8, 9) de raccordement à la pression tandis que la partie émettrice ou réceptrice (34) est disposée à l'intérieur du boîtier électronique (26).

18. Dispositif mécatronique selon l'une ou plusieurs des revendications 1 à 17, **caractérisé en ce qu'**il utilise des détecteurs de valeurs différentielles ou de valeurs absolues de la pression comme détecteurs (29) montés dans les modules de détecteur (13, 14, 40, 40a).

19. Dispositif mécatronique selon l'une ou plusieurs des revendications 1 à 18, **caractérisé en ce que** comme éléments (45, 45a) émetteurs de lumière, il présente des diodes luminescentes infrarouge (IR-LED) ou des diodes laser qui envoient des signaux au moins partiellement codés à au moins un élément (44, 44a) photosensible.

20. Dispositif mécatronique selon la revendication 19, **caractérisé en ce que** comme éléments photosensibles (44, 44a), il présente des phototransistors ou des photodiodes.
